# EUROPÄISCHE PATENTSCHRIFT

(11) **EP 2 165 950 B1**
(45) Veröffentlichungstag und Bekanntmachung des Hinweises auf die Patenterteilung: **19.01.2011**
(21) Anmeldenummer: 09153075.8
(22) Anmeldetag: 18.02.2009
(51) Int. Cl.: B65G 47/90

(54) **Bediengerät für ein automatisiertes Stückgutlager**
Operating device for an automated goods warehouse
Appareil de manoeuvre pour un magasin automatisé

(30) Priorität: 18.09.2008 DE 102008042209
(43) Veröffentlichungstag der Anmeldung: 24.03.2010
(73) Patentinhaber: Rowa Automatisierungssysteme GmbH, 53539 Kelberg (DE)
(72) Erfinder: Willems, Markus, 54550, Daun (DE)
(74) Vertreter: Zenz

(56) Entgegenhaltungen:
- EP-A- 0 733 563
- EP-A- 1 693 317
- WO-A-95/28342
- DE-A1- 19 509 951

## Beschreibung

Die Erfindung betrifft ein Bediengerät gemäß dem Oberbegriff des Anspruchs 1.

Derartige Bediengeräte sind beispielsweise aus der Patentschrift DE 199 55 615 C2 und den Anmeldungsveröffentlichungen DE 10 2004 025 070 A1 und EP 1 598 291 A2 bekannt. Ein Bediengerät, das sowohl einen Sauggreifer als auch Greifbacken aufweist, ist darüber hinaus bereits in der Patentschrift DE 195 09 951 C2 beschrieben.

Ein Bediengerät der eingangs genannten Art wird beispielsweise in einem automatisierten Regallager für quaderförmige Kleinstückgüter, z. B. Arzneimittelpackungen, verwendet, bei dem die Lagerflächen von einer Mehrzahl übereinander in einem Regal angeordneter langgestreckter Regalböden gebildet werden, wobei das Bediengerät in vertikaler und horizontaler Richtung vor der Frontseite eines Regals oder in einer Gasse zwischen zwei einander gegenüber aufgestellten Regalen verfahrbar ist. Zum Entnehmen eines oder mehrerer Stückgüter von einem Regalboden wird das Bediengerät zu einem vorgegebenen Ort eines vorgegebenen Regalbodens verfahren, wobei der Ablagetisch stirnseitig vor dem Regalboden positioniert wird. Dann werden die Klemmbacken (auch Greifbacken genannt) in das Regalfach hinein auf beiden Seiten des zu entnehmenden Stückguts oder der zu entnehmenden Stückgüter hinein gefahren, anschließend zusammengefahren, so dass sie das Stückgut oder die Stückgüter ergreifen und dann wieder aus dem Regalfach heraus gezogen, um dabei das Stückgut auf den Ablagetisch zu ziehen. Beim Einlagern eines Stückguts in ein Regalfach wird das Stückgut zunächst auf den Ablagetisch des Bediengeräts gebracht, dann das Bediengerät zu dem gewünschten Ort vor dem Regalboden gefahren, wobei die beiden Klemmbacken soweit zusammengefahren sind, dass sie an den Außenflächen des Stückguts anliegen. Dann werden die langgestreckten Klemmbacken geringfügig auseinander gefahren, so dass das Stückgut zwischen den Klemmbacken in horizontaler Richtung verschiebbar ist, aber noch von den Klemmbacken geführt wird und schließlich wird ein Schieber verwendet, um das Stückgut von dem Ablagetisch zwischen den langgestreckten Klemmbacken in das Regal zu schieben. Es ist auch denkbar, die Klemmbacken an den Seitenflächen des Stückguts festgeklemmt zu lassen, während das Stückgut von dem Schieber auf den Regalboden geschoben wird. In diesem Falle dienen Führungen der Klemmbacken als Führungen beim positionsgerechten Einlagern des Stückguts und werden die Klemmbacken dann, wenn das Stückgut an der richtigen Position auf dem Regalboden liegt, wieder auseinander gefahren und auf das Bediengerät zurückgezogen.

Bei alternativen Ausführungsformen wird zum Auslagern des Stückguts aus dem Regalboden auf den Ablagetisch ein Sauggreifer verwendet (beispielsweise ist ein Saugkopf stirnseitig an dem Schieber angeordnet). Der Sauggreifer fährt in das Regälfach ein, saugt an dem auszulagernden Stückgut fest und zieht dieses dann zurück auf den Ablagetisch. Dies ist beispielsweise in der DE 195 09 951 C2 beschrieben. Dieses Dokument besschreibt ein Bediengerät gemäß dem Oberbegriff des Anspruchs 1. Selbstverständlich kann bei einer derartigen Auslagerung stets nur ein einzelnes Stückgut aus dem Regalfach ausgelagert und auf den Ablagetisch gezogen werden, nämlich das zuvorderst liegende Stückgut.

In der Veröffentlichung EP 1 598 291 A2 ist darüber hinaus beschrieben, dass mittels der Klemmbacken auch mehrere hintereinander auf einer Lagerfläche liegende Stückgüter gleichzeitig auf den Ablagetisch des Bediengeräts gezogen werden können. Dazu ist es erforderlich, dass das hinterste Stückgut der auf den Ablagetisch zu ziehenden Reihe von mehreren Stückgütern die größte Breite aufweist, d. h. sämtliche davor liegenden, mit auf den Ablagetisch zu ziehenden Stückgüter eine geringere Breite oder höchstens dieselbe Breite aufweisen.

Es hat sich allerdings gezeigt, dass in der Praxis dann, wenn mehrere gleich breite Stückgüter gleichzeitig von der Lagerfläche auf den Ablagetisch gezogen werden sollen, Probleme derart auftreten können, dass die Klemmbacken lediglich eines der näher am vorderen Rand der Lagerfläche liegenden Stückgüter sicher erfassen, aber eines der dahinter liegenden Stückgüter, welches ebenfalls ausgelagert werden soll, nicht sicher greifen können, so dass dieses beim Herausfahren der Klemmbacken auf der Lagerfläche liegen bleibt. Dies kann selbst dann geschehen, wenn die in der Patentschrift DE 199 55 615 C2 beschriebene nachgiebig verformbare Auflage auf den Innenflächen der Klemmbacken vorgesehen ist. Darüber hinaus hat eine derartige Auflageschicht, sofern sie zum Erhöhen der Greifsicherheit eine gewisse Breite überschreitet, den Nachteil, dass die Breite der in das Regalfach hineinfahrenden Klemmbacken größer wird und somit die vorzuhaltenden Lücken zwischen nebeneinander liegenden Stückgütern, in die die Klemmbacken einfahren sollen, ebenfalls vergrößert werden müssen, so dass Lagerraum verschwendet wird.

Aufgabe der Erfindung ist es daher, ein Bediengerät zu schaffen, welches die gleichzeitige Auslagerung mehrerer hintereinander liegender, beispielsweise gleich breiter Stückgüter gestattet und dabei die Greifsicherheit erhöht.

Diese Aufgabe wird erfindungsgemäß durch ein Bediengerät mit den Merkmalen des Patentanspruchs 1 gelöst. Das erfindungsgemäße Bediengerät für ein Stückgutlager mit horizontalen Lagerflächen, das Stückgüter beim Einlagern und Auslagern in einer ersten horizontalen Richtung auf die Lagerflächen bzw. von den Lagerflächen herunter bewegt, weist einen in der ersten horizontalen Richtung benachbart zu einer Lagerfläche positionierbaren Ablagetisch zur Aufnahme wenigstens eines Stückguts und zwei über dem Ablagetisch angeordnete jeweils an einer Halterung befestigte langgestreckte Klemmbacken mit einander zugewandeten (vorzugsweise ebenen) Klemmflächen auf. Die langgestreckten Klemmbacken sind von einer Länge, dass sie einerseits nach dem Herausfahren das hinterste auf einer Lagerfläche liegende Stückgut erfassen können, andererseits aber vollständig über den Ablagetisch zurückgezogen werden können. Das Bediengerät ist bei seinem bevorzugten Einsatz in Verbindung mit einem automatisierten Regallager vorzugsweise in vertikaler und horizontaler Richtung vor einer Regalfrontseite verfahrbar. Die beiden Halterungen sind mit einem ersten Antrieb gekoppelt, um die Klemmbacken gemeinsam in der ersten horizontalen Richtung bewegen zu können, und sie sind mit einem zweiten Antrieb gekoppelt, um die Klemmbacken in einer zweiten horizontalen Richtung quer zur ersten horizontalen Richtung aufeinander zu und voneinander weg bewegen zu können, so dass wenigstens ein Stückgut zwischen den Klemmflächen gehalten und dabei in der ersten horizontalen Richtung bewegt werden kann. Bei einer Verwendung in Verbindung mit einem Regallager mit langgestreckten ebenen Regalböden entspricht die zweite horizontale Richtung der Längsrichtung der Regalböden. Erfindungsgemäß ist zumindest eine der beiden Klemmbacken mittels eines Drehlagers an der Halterung befestigt und um eine Drehachse schwenkbar. Ein dritter Antrieb greift über wenigstens ein Koppelelement zum Übertragen von Stellbewegungen auf die zumindest eine schwenkbare Klemmbacke an einem von ihrer Drehachse beabstandeten Ort derart an, dass er die Klemmbacke verschwenken kann. Bei den Koppelelementen handelt es sich beispielsweise um Schubstangen oder Schubplatten, Hebel oder Kombinationen von Seilzügen und Rückstellfedern. Der Abstand des Ortes, an dem der Antrieb über die Koppelelemente angreift, von der Drehachse bestimmt den Schwenkhebel, mit dem der dritte Antrieb die Klemmbacken verschwenkt. Der Ort befindet sich an einem beliebigen mit der Klemmbacke fest verbundenen Teil und ist beispielsweise durch einen Ansatz oder eine Bohrung an bzw. in diesem Teil definiert. Das wenigstens eine Koppelelement umfasst ein Koppelelement, das nur Stellbewegungen in der ersten horizontalen Richtung überträgt, während es eine Relativbewegung in der zweiten horizontalen Richtung zulässt, so dass die schwenkbare Klemmbacke unabhängig von ihrer (geradlinigen) Bewegung in der zweiten horizontalen Richtung und von der Stellung des zweiten Antriebs allein durch den dritten Antrieb in ihrem Winkel zu der anderen Klemmbacke verstellbar ist. Die durch diese Ausbildung des Koppelelements bewirkte Unabhängigkeit des vom dritten Antrieb bewirkten Verschwenkens der Klemmbacke(n) von dem von dem zweiten Antrieb bewirkten Auseinander- und Zusammenfahren der Klemmbacken gestattet eine vereinfachte Ansteuerung. Ein vorgegebener Winkel zwischen den beiden Klemmbacken wird beibehalten, während die Klemmbacken auseinander- oder zusammengefahren werden.

Bei einer bevorzugten Ausführungsform ist jede der beiden Klemmbacken mittels eines Drehlagers an ihrer Halterung befestigt und um eine Drehachse schwenkbar. Ein für beide Klemmbacken gemeinsamer dritter Antrieb greift über wenigstens ein gemeinsames oder jeweils wenigstens ein Koppelelement an jeweils einem von der Drehachse beabstandeten Ort derart an, dass er die beiden Klemmbacken gegensinnig verschwenken kann. Das Koppelelement bzw. die Koppelelemente für beide Klemmbacken umfasst bzw. umfassen ein Koppelelement, das nur Stellbewegungen in der ersten horizontalen Richtung überträgt, während es eine Relativbewegung in der zweiten horizontalen Richtung zulässt, so dass die Klemmbacken unabhängig von ihrer Relativbewegung in der zweiten horizontalen Richtung allein durch den dritten Antrieb in ihrem Winkel zueinanderverschwenkbar sind.

Der Ablagetisch braucht nicht flächig durchgängig zu sein; er kann auch durchbrochen, beispielsweise in Form mehrerer paralleler Führungsschienen, ausgebildet sein. Beispielsweise kann er auch von der Oberfläche eines Förderbands gebildet werden.

Bei einer Ausführungsform könnte der dritte Antrieb auf einer der beiden Halterungen angeordnet sein, die in der zweiten horizontalen Richtung auseinander- oder zusammengefahren werden und die Drehlager der Klemmbacken tragen. In diesem Fall gäbe es zwischen dem dritten Antrieb und dieser Halterung keine Relativbewegung in der zweiten horizontalen Richtung. Dadurch könnte der dritte Antrieb über ein Koppelelement direkt an einem von der Drehachse beabstandeten Ort der Klemmbacke angreifen und Stellbewegungen zum Verschwenken dieser Klemmbacken übertragen, wobei die Richtung der Stellbewegungen beliebig sein könnte, d. h., es bräuchten keine Stellbewegungen in der zweiten horizontalen Richtung vermieden zu werden, weil es an der Relativbewegung zwischen Antrieb und Klemmbacke in dieser Richtung fehlt. Die Koppelelemente jedoch, die diesen dritten Antrieb mit der Klemmbacke auf der anderen Halterung verbinden, müssten - wie oben definiert - ein Koppelelement umfassen, das nur Stellbewegungen in der ersten horizontalen Richtung überträgt, während es eine Relativbewegung in der zweiten horizontalen Richtung zulässt, damit auch diese Klemmbacke unabhängig von ihrer Bewegung in der zweiten horizontalen Richtung und unabhängig von der Stellung des zweiten Antriebs allein durch den dritten Antrieb in ihrem Winkel verstellt werden kann. Bei einer bevorzugten Ausführungsform jedoch ist der dritte Antrieb außerhalb beider Halterungen angeordnet, so dass es aufgrund der Bewegung beider Halterungen in der zweiten horizontalen Richtung Relativbewegungen zwischen dem dritten Antrieb und den beiden Halterungen gibt. Dann umfassen die Koppelelemente für beide Klemmbacken jeweils ein Koppelelement, das nur Stellbewegungen in der ersten horizontalen Richtung überträgt, während es eine Relativbewegung in der zweiten horizontalen Richtung zulässt.

Bei einer bevorzugten Ausführungsform befindet sich der von der Drehachse der Klemmbacke beabstandete Ort, an dem der dritte Antrieb über wenigstens ein Koppelelement derart angreift, dass er die Klemmbacke verschwenken kann, an einem Ende eines mit dem Drehlager verbundenen Hebelarms. Beispielsweise erstreckt sich der Hebelarm ausgehend von der sich in der ersten horizontalen Richtung erstreckenden langgestreckten Klemmbacke in der zweiten horizontalen Richtung, wobei er in der Nähe des Drehlagers ansetzt.

Eine bevorzugte Ausführungsform des erfindungsgemäßen Bediengeräts ist dadurch gekennzeichnet, dass das Koppelelement, das nur Stellbewegungen in der ersten horizontalen Richtung überträgt, während es eine Relativbewegung in der zweiten horizontalen Richtung zulässt, eine von dem dritten Antrieb in der ersten horizontalen Richtung linear hin und her bewegbare Schubplatte oder Schubstange umfasst, die ein sich in der zweiten horizontalen Richtung erstreckendes (gerades) Langloch aufweist, in das ein an der Klemmbacke befestigter Ansatz eingreift. Die Schubplatte kann beispielsweise so breit sein, dass sie in der zweiten horizontalen Richtung beide Klemmbacken übergreift, und zwei Langlöcher aufweisen, in die jeweils ein Ansatz einer der beiden Klemmbacken eingreift. Dabei können die Ansätze der Klemmbacken, die in die Langlöcher eingreifen, in der ersten horizontalen Richtung gesehen, auf der Höhe der Drehachse oder in Richtung der Lagerfläche davor oder dahinter angeordnet sein. Der in das Langloch eingreifende Ansatz der Klemmbacke kann beispielsweise mit einer verschiebbaren Führungsrolle versehen sein, um die Reibung zu mindern.

Bei einer alternativen Ausführungsform umfasst das Koppelelement, das nur Stellbewegungen in der ersten horizontalen Richtung überträgt, während es eine Relativbewegung in der zweiten horizontalen Bewegung zulässt, ebenfalls eine von dem dritten Antrieb in der ersten horizontalen Richtung linear hin und her bewegbare Schubplatte, die ein sich in der zweiten horizontalen Richtung erstreckendes Langloch aufweist. Hier allerdings greift in das Langloch ein Ansatz ein, der an einem weiteren, auf der Halterung montierten Koppelelement befestigt ist. Das weitere Koppelelement überträgt dann die Stellbewegung auf die zugehörige Klemmbacke. Beispielsweise kann das weitere Koppelelement ein um eine Drehachse schwenkbarer zweiseitiger Hebel sein, dessen eines Ende den in das Langloch eingreifenden Ansatz trägt und dessen anderes Ende an einem von der Drehachse beabstandeten Ort der Klemmbacke eingreift, beispielsweise über eine Gelenkverbindung. In diesem Fall ist es denkbar, dass sich der von der Drehachse beabstandete Ort der Klemmbacke, an dem das Koppelelement angreift, in der ersten horizontalen Richtung vor oder hinter der Drehachse befindet, also nicht in der zweiten horizontalen Richtung seitlich versetzt neben der Drehachse angeordnet zu sein braucht.

Bei einer bevorzugten Ausführungsform des erfindungsgemäßen Bediengeräts bilden beide Halterungen und Klemmbacken zusammen mit dem zweiten und dem dritten Antrieb eine Baueinheit, die in der ersten horizontalen Richtung über den Ablagetisch bewegbar ist. Eine solche Ausführungsform sichert, dass die Bewegung der Klemmbacken aufeinander zu und voneinander weg sowie deren Verschwenken unabhängig von der Bewegung der Klemmbacken in der ersten horizontalen Richtung ist. Diese Unabhängigkeit der durch den ersten, den zweiten und den dritten Antrieb bewirkten Stellbewegungen hat beispielsweise den Vorteil, dass eine Relativposition der beiden Klemmbacken, d. h. die Stellung des zweiten und des dritten Antriebs, nicht geändert, d. h. nachgeführt, zu werden braucht, wenn die Klemmbacken in der ersten horizontalen Richtung von der Lagerfläche auf den Ablagetisch gezogen werden.

Bei einer bevorzugten Ausführungsform ist über dem Ablagetisch und zwischen den Klemmbacken eine ausgehend von der der Lagerfläche gegenüber liegenden Seite des Ablagetischs in der ersten horizontalen Richtung ausfahrbare Schiebevorrichtung angeordnet. Mit Hilfe dieser Schiebevorrichtung können auf dem Ablagetisch aufliegende Stückgüter auf die Lagerfläche geschoben werden, wobei in diesem Fall die Klemmbacken als Führungseinrichtungen dienen können. Die Schiebevorrichtung ist vorzugsweise mit einem vierten Antrieb gekoppelt. Bei einer bevorzugten Weiterbildung weist die Schiebevorrichtung einen Saugkopf auf, mit dem es möglich ist, ein auf einer Lagerfläche lagerndes Stückgut anzusaugen und auf den Ablagetisch zu ziehen. Diese Möglichkeit des Verschiebens eines Stückguts kann selbstverständlich nur für das zuvorderst auf der Lagerfläche liegende Stückgut angewendet werden.

Vorzugsweise sind die langgestreckten Klemmbacken aus einem federnden (nachgiebigen) Material gebildet. Wenn die Klemmbacken dann zunächst in der parallelen Ausrichtung über eine Lagerfläche (beispielsweise ein Regalfach) eingefahren werden und dann anschließend so verschwenkt werden, dass sich der Abstand der Klemmbacken mit der Regaltiefe verjüngt, so führt dies bei einer Reihe gleich breiter hintereinander liegender Stückgüter zunächst dazu, dass sich die Klemmbacken an das am weitesten hinten liegende Stückgut anlegen und dabei geringfügig durchbiegen, so dass die Klemmbacken mit einer größeren Anlagefläche auf dem Stückgut aufliegen, was die Haftreibung verbessert. Bei einer anderen bevorzugten Ausführungsform sind die Klemmflächen der langgestreckten Klemmbacken mit einem rutschhemmenden Material belegt.

Vorteilhafte und/oder bevorzugte Weiterbildungen der Erfindung sind in den Unteransprüchen gekennzeichnet.

Die Erfindung wird nun anhand eines Ausführungsbeispiels beschrieben, das in den beiliegenden Figuren dargestellt ist.
Fig. 1 zeigt einen Teil des erfindungsgemäßen Bediengeräts gemäß einer ersten Ausführungsform in einer Ansicht von oben;
Fig. 2 zeigt den Teil des Bediengeräts gemäß der ersten Ausführungsform in einer Ansicht von der Seite;
Fig. 3 zeigt den Teil des Bediengeräts der ersten Ausführungsform in einer Ansicht von hinten;
Fig. 4 zeigt das Bediengerät gemäß einer ersten Ausführungsform in einer Sicht von oben.

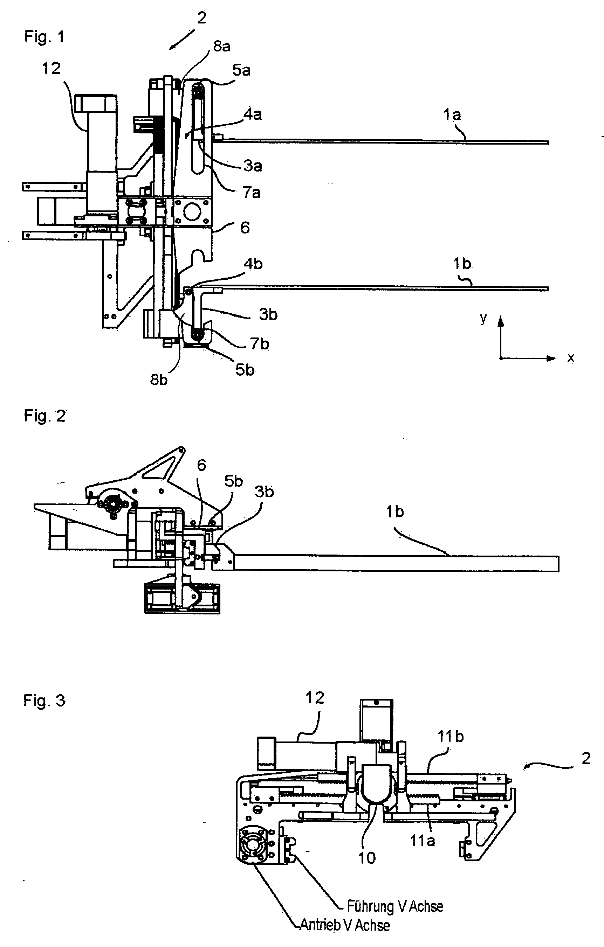

Fig. 1 zeigt eine Draufsicht auf einen Teil des erfindungsgemäßen Bediengeräts, der zwei sich in einer ersten horizontalen Richtung (x) erstreckende langgestreckte Klemmbacken 1a, 1b und einen die Klemmbacken tragenden und führenden Kopfteil 2 umfasst. Der Kopfteil 2 enthält sowohl die Antriebe als auch Steuerschaltungen. Im Bereich des Kopfteils 2 weisen die Klemmbacken 1a und 1b zwei Winkelstücke 3a bzw. 3b auf. Die Winkelstücke 3a und 3b sind in der Form von T-Stücken mit ungleichmäßigen Schenkeln ausgebildet. Die Winkelstücke sind mit Hilfe von Drehlagern an Halterungen 8a, 8b befestigt. Die Klemmbacken 1a, 1b sind daher zusammen mit ihren Winkelstücken um die Drehachsen 4a und 4b in einer horizontalen Ebene schwenkbar, wobei sie in ihrem Winkel zueinander verstellbar sind (die horizontale Ebene liegt in Fig. 1 in der Blattebene). Am Ende der mittleren, langen Schenkel der T-Stücke ist jeweils eine Führungsrolle 5a bzw. 5b angeordnet, die drehbar gelagert ist und sich nach oben (in Fig. 1 nach oben aus der Papierebene heraus) erstreckt. Die Führungsrollen 5a und 5b sind in zwei Langlöchern 7a und 7b einer Führungseinrichtung 6 geführt. Die Führungsrollen 5a und 5b können entlang der Langlöcher 7a und 7b abrollen. Die Langlöcher erstrecken sich in der zweiten horizontalen Richtung (y), in der die beiden Klemmbacken aufeinander zu bzw. voneinander weg bewegt werden können. Die Führungseinrichtung 6 ist mit einem Antrieb (12) gekoppelt, der sie - relativ zu den Klemmbacken - in der ersten horizontalen Richtung (x) bewegen kann. Wird die Führungseinrichtung 6 in der horizontalen Ebene in Richtung der freien Enden der Klemmbacken 1a und 1b (d.h. in der ersten horizontalen Richtung) verstellt, so werden die Winkelstücke 3a und 3b an ihren Drehachsen 4a und 4b festgehalten, während die freien Winkelenden mit den Führungsrollen 5a und 5b der Bewegung der Führungseinrichtung 6 durch Abrollen in den Langlöchern 7a und 7b folgen. Dadurch wird die Winkellage der Winkelstücke 3a und 3b und damit der Winkel zwischen den Klemmbacken 1a und 1b verändert. Die Klemmbacken 1a und 1b mitsamt den Winkelstücken 3a und 3b und den daran befestigten Führungsrollen sind außerdem in ihrem Abstand zueinander verstellbar, wie weiter unter in Bezug auf Fig. 3 beschrieben wird. Doch auch bei Verstellung der Abstände der Backen 1a und 1b zueinander ist durch horizontale Verstellung der Führungseinrichtung 6 jederzeit eine Klemmbewegung bzw. Öffnungsbewegung des Winkels zwischen den Klemmbacken 1a und 1b erreichbar, da die Führungsrollen jederzeit in den Langlöchern 7a und 7b geführt sind. Die sich in der y-Richtung erstreckenden Langlöcher 7a, 7b sorgen dafür, dass über die Führungseinrichtung 6 nur Stellbewegungen in der x-Richtung auf die Klemmbacken übertragen werden, während sie Relativbewegungen in der y-Richtung zulassen. Dadurch wirkt sich ein Auseinander- oder Zusammenfahren der Klemmbacken nicht auf den eingestellten Schwenkwinkel aus.

Da die beiden Klemmbacken 1a und 1b mit ihren Führungsrollen 5a und 5b in derselben Führungseinrichtung 6 geführt sind und die Führungsrollen denselben Abstand von den Drehachsen 4a und 4b aufweisen, werden die Klemmbacken 1a und 1b synchron zueinander gegensinnig geschwenkt.

In der dargestellten Ausführungsform dient der Antrieb 12 zur Verstellung des Winkels der Klemmbacken zueinander, wobei beide Klemmbacken gleichzeitig verstellt werden. Es genügt ein einziger Antrieb, der die Führungseinrichtung 6 in horizontaler Richtung verfährt, um beide Klemmbacken gleichzeitig und synchron zu verstellen. Durch die Verwendung eines einzigen Antriebs werden mehrere Vorteile erzielt. Es kann nicht zu ungleichmäßigen Verstellungen der Klemmbacken zueinander kommen. Schlupf oder Aussetzer dieses Antriebs oder sonstige Fehlfunktionen wirken sich daher auf beide Klemmbacken gleichermaßen aus. Außerdem lässt die Verwendung eines einzigen Schwenkantriebs im Bereich des Antriebsabschnitts 2 zu, dass die Klemmbacken vollständig frei in das Regal ragen, ohne dass zur Veränderung des Öffnungswinkels Antriebe oder Kopplungsmittel erforderlich sind, die in weiter in Regalrichtung liegenden Abschnitten angeordnet sind.

Fig. 2 zeigt den Teil des Bediengeräts gemäß Fig. 1 in einer Seitenansicht. Es ist dargestellt, dass die Führungsrolle 5b durch die Öffnung (Langloch) 7b der Führungseinrichtung 6 hindurchgreift.

Fig. 3 zeigt den in den Fig. 1 und 2 gezeigten Teil des Bediengeräts mit einer Rückansicht des Kopf- bzw. Antriebsteils 2. Es ist dargestellt, dass ein Antrieb 10 mit zwei gegensinnig angetriebenen Zahnstangen 11a und 11b gekoppelt ist. Die Zahnstangen sind mit den Halterungen 8a und 8b der Klemmbacken 1a und 1b verbunden. Damit kann der Abstand der Klemmbacken (einschließlich der Lager 4a und 4b und der Führungsrollen 5a, 5b) in der zweiten horizontalen Richtung (y) verstellt werden. Der Antrieb 10 dient somit dem synchronen Verstellen der Klemmbacken in der zweiten horizontalen Richtung (y), ohne dabei den Winkel der Klemmbacken zueinander zu verändern.

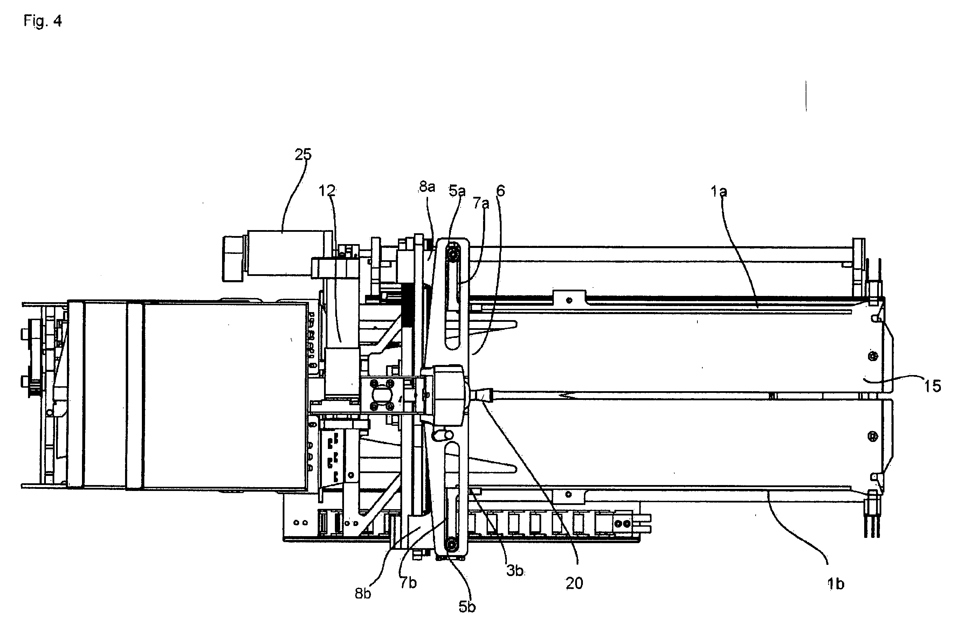

Fig. 4 zeigt eine Ansicht des erfindungsgemäßen Bediengeräts von oben, wobei der in den Figuren 1, 2 und 3 gezeigte Teil mit einem Antriebs- und Steueraufbau verbunden ist. Die Klemmbacken sind über einem Ablagetisch 15 angeordnet, auf den die Stückgüter gezogen oder von dem die Stückgüter in die Regale geschoben werden können. Dazu kann der Ablagetisch 15 vor die Regalböden verfahren werden, in welche eingelagert oder aus welchen ausgelagert werden soll. Zwischen den Klemmbacken 1a und 1b ist eine Schiebereinrichtung 20 angeordnet, die zusätzlich als Sauggreifer ausgebildet ist. Dieser Sauggreifer kann zwischen den Klemmbacken unabhängig von diesen in der ersten horizontalen Richtung verfahren werden und kann Stückgüter auf dem Ablagetisch 15 und über diesen hinaus in ein Regallager verschieben oder bei Beaufschlagung mit Unterdruck Stückgüter auf den Ablagetisch 15 ziehen.

Die Klemmbacken 1a und 1b und auch die Schiebeeinrichtung 20 können relativ zu dem Ablagetisch 15 verfahren werden, so dass sie über den Ablagetisch 15 hinausragen (in Fig. 4 nach rechts). Die Klemmbacken können in diesem Fall mehrere Stückgüter gleichzeitig umgreifen, eine Klemmkraft durch Veränderung des Winkels über Einwirkung der Führungseinrichtung 6 aufbringen und die Stückgüter auf den Ablagetisch 15 ziehen.

Dabei arbeiten die Klemmbacken 1a und 1b unabhängig von der Schieber- bzw. Saugeinrichtung 20. Die Einrichtungen können jederzeit in ergänzender oder paralleler Weise angesteuert werden. Die Klemmbacken 1a und 1b können auch als Führungseinrichtungen in ein Regallager bewegt werden, währen die Schiebereinrichtung 20 Stückgüter in das Regal schiebt oder ein Stückgut aus dem Regal entnimmt. Die Saugeinrichtung 20 ermöglicht es, solche Stückgüter zu fassen und aus dem Regal zu befördern, die für den Zugriff der Klemmbacken 1a und 1b nicht geeignet sind, z. B. runde Flaschen oder ähnliches.

Der typische Ablauf für einen Bedienvorgang mit dem erfindungsgemässen Bediengerät besteht im gesteuerten Heranfahren an ein Fach eines Regallagers, so dass der Ablagetisch 15 unmittelbar vor der Stirnseite des Regalbodens angeordnet wird (bei Einlagerung ggf. geringfügig darüber, bei Auslagerung ggf. geringfügig darunter). Für eine Entnahme werden die Klemmbacken 1a und 1b in ihrem Abstand zueinander über den zweiten Antrieb 10 derart eingestellt, dass sie die angesteuerte Stückgüterreihe beidseitig umgreifen. Dann werden die Klemmbacken über den ersten Antrieb in das Regal hinein gefahren, bis die Enden der Klemmbacken neben dem letzten zu entnehmenden Stückgut positioniert sind. Über den dritten Antrieb 12 werden die Klemmbacken nach Art einer Kneifbewegung um das betreffende Stückgut geschlossen und das geklemmte Stückgut wird mitsamt den davor liegenden Stückgütern mit Hilfe des Antriebs 25 auf den Ablagetisch 15 gezogen.

## Patentansprüche

1. Bediengerät für ein Stückgutlager mit horizontalen Lagerflächen, das Stückgüter beim Einlagern und Auslagern in einer ersten horizontalen Richtung auf die Lagerflächen bzw. von den Lagerflächen herunter bewegt und aufweist:
einen in der ersten horizontalen Richtung (x) benachbart zu einer Lagerfläche positionierbaren Ablagetisch (15) zur Aufnahme wenigstens eines Stückguts und
zwei über dem Ablagetisch angeordnete, jeweils an einer Halterung (8a, 8b) befestigte langgestreckte Klemmbacken (1a, 1b, 3a, 3b) mit einander zugewandten Klemmflächen, wobei die Halterungen mit einem ersten Antrieb (25) gekoppelt sind, um die Klemmbacken gemeinsam in der ersten horizontalen Richtung (x) zu bewegen, und mit einem zweiten Antrieb (10, 11) gekoppelt sind, um die Klemmbacken in einer zweiten horizontalen Richtung (y) quer zur ersten horizontalen Richtung (x) aufeinander zu und voneinander weg zu bewegen, so dass wenigstens ein Stückgut zwischen den Klemmflächen gehalten und dabei in der ersten horizontalen Richtung (x) bewegt werden kann,
**dadurch gekennzeichnet,**
**dass** zumindest eine der beiden Klemmbacken mittels eines Drehlagers an der Halterung (8a, 8b) befestigt und um eine Drehachse (4a, 4b) schwenkbar ist,
wobei ein dritter Antrieb (12) über wenigstens ein Koppelelement (6, 7a, 7b) zum Übertragen von Stellbewegungen auf die zumindest eine schwenkbare Klemmbacke (1a, 1b, 3a, 3b) an einem von ihrer Drehachse beabstandeten Ort derart angreift, dass er die Klemmbacke verschwenken kann,
wobei das wenigstens eine Koppelelement (6) ein Koppelelement umfasst, das nur Stellbewegungen in der ersten horizontalen Richtung (x) überträgt, während es eine Relativbewegung in der zweiten horizontalen Richtung (y) zulässt, so dass die schwenkbare Klemmbacke unabhängig von ihrer Bewegung in der zweiten horizontalen Richtung (y) und von der Stellung des zweiten Antriebs (10, 11) allein durch den dritten Antrieb (12) in ihrem Winkel zu der anderen Klemmbacke verstellbar ist.

2. Bediengerät nach Anspruch 1, **dadurch gekennzeichnet, dass** jede der beiden Klemmbacken (1a, 1b, 3a, 3b) mittels eines Drehlagers an ihrer Halterung (8a, 8b) befestigt und um eine Drehachse (4a, 4b) schwenkbar ist,
wobei ein für beide Klemmbacken (1a, 1b, 3a, 3b) gemeinsamer dritter Antrieb (12) über wenigstens ein gemeinsames oder jeweils wenigstens ein Koppelelement (6, 7a, 7b) an jeweils einem von der Drehachse beabstandeten Ort derart angreift, dass er die beiden Klemmbacken gegensinnig verschwenken kann,
wobei das Koppelelement bzw. die Koppelelemente (6) für beide Klemmbacken ein Koppelelement umfasst bzw. umfassen, das nur Stellbewegungen in der ersten horizontalen Richtung (x) überträgt, während es eine Relativbewegung in der zweiten horizontalen Richtung (y) zulässt, so dass die Klemmbacken unabhängig von ihrer Relativbewegung in der zweiten horizontalen Richtung (y) allein durch den dritten Antrieb (12) in ihrem Winkel zueinander verschwenkbar sind.

3. Bediengerät nach Anspruch 2, **dadurch gekennzeichnet, dass** der dritte Antrieb (12) außerhalb der beiden Halterungen angeordnet ist, so dass aufgrund der Bewegung der Halterungen in der zweiten horizontalen Richtung (y) Relativbewegungen zwischen dem dritten Antrieb (12) und beiden Halterungen stattfinden, so dass die Koppelelemente für beide Klemmbacken jeweils ein Koppelelement (6, 7a, 7b) umfassen, das nur Stellbewegungen in der ersten horizontalen Richtung (x) überträgt, während es eine Relativbewegung in der zweiten horizontalen Richtung (y) zulässt.

4. Bediengerät nach einem der Ansprüche 1 - 3, **dadurch gekennzeichnet, dass** der von der Drehachse (4a, 4b) der Klemmbacke (1a, 1b, 3a, 3b) beabstandete Ort, an dem der dritte Antrieb (12) über wenigstens ein Koppelelement (6, 7a, 7b) derart angreift, dass er die Klemmbacke verschwenken kann, sich an einem Ende eines mit dem Drehlager verbundenen Hebelarms (3a, 3b) befindet.

5. Bediengerät nach einem der Ansprüche 1 - 4, **dadurch gekennzeichnet, dass** das Koppelelement, das nur Stellbewegungen in der ersten horizontalen Richtung (x) überträgt, während es eine Relativbewegung in der zweiten horizontalen Richtung (y) zulässt, eine von dem dritten Antrieb (12) in der ersten horizontalen Richtung (x) linear hin und her bewegbare Schubplatte (6) umfasst, die ein sich in der zweiten horizontalen Richtung (y) erstreckendes Langloch (7a, 7b) aufweist, in das ein an der Klemmbacke befestigter Ansatz (5a, 5b) eingreift.

6. Bediengerät nach Anspruch 5, **dadurch gekennzeichnet, dass** der Ansatz eine in dem Langloch (7a, 7b) verschiebbare Führungsrolle (5a, 5b) ist.

7. Bediengerät nach einem der Ansprüche 1 - 4, **dadurch gekennzeichnet, dass** das Koppelelement, das nur Stellbewegungen in der ersten horizontalen Richtung (x) überträgt, während es eine Relativbewegung in der zweiten horizontalen Richtung (y) zulässt, eine von dem dritten Antrieb in der ersten horizontalen Richtung (x) linear hin und her bewegbare Schubplatte (6) umfasst, die ein sich in der zweiten horizontalen Richtung (y) erstreckendes Langloch aufweist, in das ein Ansatz eingreift, der an einem weiteren, auf der Halterung montierten Koppelelement befestigt ist, wobei das weitere Koppelelement die Stellbewegung auf die zugehörige Klemmbacke überträgt.

8. Bediengerät nach einem der Ansprüche 1 - 7, **dadurch gekennzeichnet, dass** beide Halterungen und Klemmbacken (1a, 1b, 3a, 3b) zusammen mit dem zweiten (10, 11) und dem dritten Antrieb (12) eine Baueinheit bilden, die mit Hilfe des ersten Antriebs (25) in der ersten horizontalen Richtung (x) über dem Ablagetisch (15) bewegbar ist.

9. Bediengerät nach einem der Ansprüche 1 - 8, **dadurch gekennzeichnet, dass** über dem Ablagetisch (15) und zwischen den Klemmbacken (1a, 1b, 3a, 3b) eine ausgehend von der der Lagerfläche gegenüberliegenden Seite des Ablagetischs in der ersten horizontalen Richtung (x) ausfahrbare Schiebevorrichtung (20) angeordnet ist.

10. Bediengerät nach Anspruch 9, **dadurch gekennzeichnet, dass** die Schiebevorrichtung (20) mit einem vierten Antrieb gekoppelt ist.

11. Bediengerät nach Anspruch 9 oder 10, **dadurch gekennzeichnet, dass** die Schiebevorrichtung (20) einen Saugkopf aufweist, um ein auf einer Lagerfläche lagerndes Stückgut anzusaugen und auf den Ablagetisch (15) zu ziehen.

12. Bediengerät nach einem der vorstehenden Ansprüche, **dadurch gekennzeichnet, dass** die langgestreckten Klemmbacken (1a, 1b, 3a, 3b) aus einem federnden Material gebildet sind.

13. Bediengerät nach einem der vorstehenden Ansprüche, **dadurch gekennzeichnet, dass** die Klemmflächen der langgestreckten Klemmbacken (1a, 1b, 3a, 3b) mit einem rutschhemmenden Material belegt sind.

## Claims

1. A service device for a piece goods store with horizontal support surfaces, which, when piece goods are moved into and out of the store, moves them in a first horizontal direction on to the support surfaces or down from the support surfaces and includes:
a support table (15) positionable in the first horizontal direction (x) adjacent to a support surface for receiving at least one piece good and
two elongate clamping jaws (1a, 1b, 3a, 3b), which are arranged above the support table and are secured to a respective mounting (8a, 8b), with clamping surfaces directed towards one another, wherein the mountings are coupled to a first actuator (25) in order to move the clamping jaws together in the first horizontal direction (x), and coupled to a second actuator (10, 11) in order to move the clamping jaws towards one another and away from one another in a second horizontal direction (y) transverse to the first horizontal direction (x), so that at least one piece good can be held between the clamping surfaces and thus moved in the first horizontal direction (x)
**characterised in that** at least one of the two clamping jaws is secured by means of a pivotal bearing to the mounting (8a, 8b) and is pivotable about a rotary axis (4a, 4b),
wherein a third actuator (12) engages the at least one pivotable clamping jaw (1a, 1b, 3a, 3b) at a location spaced from its rotary axis via at least one coupling element (6, 7a, 7b) for transmitting positioning movement such that it can pivot the clamping jaw,
wherein the at least one coupling element (6) includes a coupling element which transmits only positioning movement in the first horizontal direction (x) whilst it permits relative movement in the second horizontal direction (y), so that the pivotable clamping jaw is adjustable in its angle to the other clamping jaw independently of its movement in the second horizontal direction (y) and of the position of the second actuator (10, 11) only by the third actuator (12).

2. A service device as claimed in claim 1, **characterised in that** each of the two clamping jaws (1a, 1b, 3a, 3b) is fastened by means of a rotary bearing to its mounting (8a, 8b) and is pivotable about a rotary axis (4a, 4b),
wherein a third actuator (12) common to both clamping jaws (1a, 1b, 3a, 3b) engages at a location spaced from the rotary axis via at least one common or at least one respective coupling element (6, 7a, 7b) such that it can pivot the two clamping jaws in opposite senses,
wherein the coupling element or the coupling elements (6) for the two clamping jaws includes or include a coupling element which transmits only positioning movements in the first horizontal direction (x) whilst it permits relative movement in the second horizontal direction (y), so that the clamping jaws are angularly pivotable with respect to one another independently of their relative movement in the second horizontal direction (y) only by the third actuator (12).

3. A service device as claimed in claim 2, **characterised in that** the third actuator (12) is arranged outside the two mountings so that as a result of the movement of the mountings in the second horizontal direction (y), relative movements occur between the third actuator (12) and the two mountings so that the coupling elements for both clamping jaws include a respective coupling element (6, 7a, 7b), which transmits only positioning movements in the first horizontal direction (x) whilst it permits relative movement in the second horizontal direction (y).

4. A service device as claimed in one of claims 1 - 3, **characterised in that** the location spaced from the rotary axis (4a, 4b) of the clamping jaw (1a, 1b, 3a, 3b), at which the third actuator (12) engages via at least one coupling element (6, 7a, 7b) such that it can pivot the clamping jaw is located at one end of a lever arm (3a, 3b) connected to the rotary bearing.

5. A service device as claimed in one of claims 1 - 4, **characterised in that** the coupling element, which transmits only positioning movements in the first horizontal direction (x) whilst it permits relative movement in the second horizontal direction (y), includes a slide plate (6), which is movable linearly back and forth in the first horizontal direction (x) by the third actuator (12) and which has an elongate hole (7a, 7b) extending in the second horizontal direction, into which a projection (5a, 5b) connected to the clamping jaw engages.

6. A service device as claimed in claim 5, **characterised in that** the projection is a guide roller (5a, 5b) movable within the elongate hole (7a, 7b).

7. A service device as claimed in one of claims 1 - 4, **characterised in that** the coupling element, which only transmits positioning movements in the first horizontal direction (x) whilst it permits relative movement in the second horizontal direction (y), includes a slide plate (6), which is movable linearly back and forth by the third actuator in the first horizontal direction (x) and which has an elongate hole extending in the second horizontal direction (y), into which a projection engages, which is connected to a further coupling element mounted on the mounting, wherein the further coupling element transmits the positioning movement to the associated clamping jaw.

8. A service device as claimed in one of claims 1 - 7, **characterised in that** the two mountings and clamping jaws (1a, 1b, 3a, 3b) together with the second (10, 11) and the third actuator (12) constitute a unit, which is movable with the aid of the first actuator (25) in the first horizontal direction (x) above the support table (15).

9. A service device as claimed in one of claims 1 - 8, **characterised in that** a pusher device, which may be extended in the first horizontal direction (x) starting from the side opposite to the support surface, is arranged above the support table (15) and between the clamping jaws (1a, 1b, 3a, 3b).

10. A service device as claimed in claim 9, **characterised in that** the pusher device (20) is coupled to a fourth actuator.

11. A service device as claimed in claim 9 or 10, **characterised in that** the pusher device (20) has a suction head in order to attract a piece good resting on a support surface by suction and to pull it on to the support table (15).

12. A service device as claimed in one of the preceding claims, **characterised in that** the elongate clamping jaws (1a, 1b, 3a, 3b) are constituted of a resilient material.

13. A service device as claimed in one of the preceding claims, **characterised in that** the clamping surfaces of the elongate clamping jaws (1a, 1b, 3a, 3b) are lined with a slip-resistant material.

## Revendications

1. Organe de commande pour un magasin d'articles avec des surfaces de stockage horizontales, qui déplace des articles vers le bas dans une première direction horizontale lors du stockage sur les surfaces de stockage ou du retrait de celles-ci et qui présente
une table de dépôt (15) positionnable dans la première direction horizontale (x) de manière adjacente à une surface de stockage et destinée à recevoir au moins un article, et
deux mors de serrage (1a, 1b, 3a, 3b) allongées, agencées sur la table de dépôt et fixées, respectivement, sur un support (8a, 8b) avec des surfaces de serrage tournées l'une vers l'autre, dans lequel les supports sont couplés à un premier entraînement (25) pour déplacer les mors de serrage ensemble dans la première direction horizontale (x) et sont couplés à un deuxième entraînement (10, 11) pour déplacer l'un vers l'autre les mors de serrage dans une seconde direction horizontale (y) transversalement à la première direction horizontale (x) et pour les écarter l'un de l'autre de manière à pouvoir retenir au moins un article entre les surfaces de serrage et à le déplacer en l'occurrence dans la première direction horizontale (x),
**caractérisé en ce que**
au moins l'un des deux mors de serrage est fixé au moyen d'un palier de rotation sur le support (8a, 8b) et peut pivoter autour d'un axe de rotation (4a, 4b),
dans lequel un troisième entraînement (12) est appliqué par au moins un élément de couplage (6, 7a, 7b) pour transmettre des mouvements de réglage au au moins un mors de serrage pivotant (1a, 1b, 3a, 3b) à un emplacement distant de son axe de rotation de sorte qu'il puisse faire pivoter le mors de serrage,
dans lequel le au moins un élément de couplage (6) comprend un élément de couplage qui ne transmet que des mouvements de réglage dans la première direction horizontale (x), tandis qu'il autorise un mouvement relatif dans la seconde direction horizontale (y) de sorte que l'angle du mors de serrage pivotant par rapport à l'autre mors de serrage puisse être ajusté indépendamment de son mouvement dans la seconde direction horizontale (y) et de la position du deuxième entraînement (10, 11) seulement par le troisième entraînement (12).

2. Organe de commande selon la revendication 1, **caractérisé en ce que** chacun des deux mors de serrage (1a, 1b, 3a, 3b) est fixé au moyen d'un palier de rotation sur son support (8a, 8b) et peut pivoter autour d'un axe de rotation (4a, 4b),
dans lequel un troisième entraînement (12) commun aux deux mors de serrage (1a, 1b, 3a, 3b) est appliqué par au moins un élément de couplage commun ou respectivement au moins un élément de couplage (6, 7a, 7b) à un endroit respectif distant de l'axe de rotation de sorte qu'il puisse faire pivoter les deux mors de serrage en sens inverse,
dans lequel le ou les éléments de couplage (6) pour les deux mors de serrage comprend ou comprennent un élément de couplage qui transmet uniquement des mouvements de réglage dans la première direction horizontale (x), tandis qu'il autorise un mouvement relatif dans la seconde direction horizontale (y) de sorte que les mors de serrage puissent pivoter indépendamment de leur mouvement relatif dans la seconde direction horizontale (y) seulement par le troisième entraînement (12) en ajustant leur angle mutuel.

3. Organe de commande selon la revendication 2, **caractérisé en ce que** le troisième entraînement (12) est agencé en dehors des deux supports de manière à produire, en raison du mouvement des supports dans la seconde direction horizontale (y), des mouvements relatifs entre le troisième entraînement (12) et les deux supports de sorte que les éléments de couplage pour les deux mors de serrage comprennent respectivement un élément de couplage (6, 7a, 7b) qui ne transmette que des mouvements de réglage dans la première direction horizontale (x), tandis qu'il autorise un mouvement relatif dans la seconde direction horizontale (y).

4. Organe de commande selon l'une quelconque des revendications 1 à 3, **caractérisé en ce que** l'emplacement distant de l'axe de rotation (4a, 4b) des mors de serrage (1a, 1b, 3a, 3b), où est appliqué le troisième entraînement (12) via au moins un élément de couplage (6, 7a, 7b) de manière à pouvoir faire tourner les mors de serrage, se trouve à une extrémité d'un bras de levier (3a, 3b) raccordé au palier de rotation.

5. Organe de commande selon l'une quelconque des revendications 1 à 4, **caractérisé en ce que** l'élément de couplage qui ne transmet que des mouvements de réglage dans la première direction horizontale (x), tandis qu'il autorise un mouvement relatif dans la seconde direction horizontale (y), comprend une plaque de poussée (6) déplaçable linéairement dans un sens et dans l'autre par le troisième entraînement (12) dans la première direction horizontale (x), qui présente un trou oblong (7a, 7b) s'étendant dans la seconde direction horizontale (y), dans lequel s'engage une saillie (5a, 5b) fixée sur le mors de serrage.

6. Organe de commande selon la revendication 5, **caractérisé en ce que** la saillie est un rouleau de guidage (5a, 5b) coulissant dans le trou oblong (7a, 7b) .

7. Organe de commande selon l'une quelconque des revendications 1 à 4, **caractérisé en ce que** l'élément de couplage, qui ne transmet que des mouvements de réglage dans la première direction horizontale (x), tandis qu'il autorise un mouvement relatif dans la second direction horizontale (y), comprend une plaque de poussée (6) déplaçable linéairement dans un sens et dans l'autre par le troisième entraînement dans la première direction horizontale (x), qui présente un trou oblong s'étendant dans la seconde direction horizontale (y), dans lequel s'engage une saillie fixée sur un autre élément de couplage monté sur le support, l'autre élément de couplage transmettant le mouvement de réglage au mors de serrage correspondant.

8. Organe de commande selon l'une quelconque des revendications 1 à 7, **caractérisé en ce qu'** à la fois les supports et les mors de serrage (1a, 1b, 3a, 3b) forment, conjointement avec les deuxième (10, 11) et troisième entraînements (12), une structure qui est déplaçable à l'aide du premier entraînement (25) dans la première direction horizontale (x) sur la table de dépôt (15).

9. Organe de commande selon l'une quelconque des revendications 1 à 8, **caractérisé en ce que**, sur la table de dépôt (15) et entre les mors de serrage (1a, 1b, 3a, 3b), on agence un dispositif de coulissement (20) déployable à partir du côté opposé à la surface de palier de la table de dépôt dans la première direction horizontale (x).

10. Organe de commande selon la revendication 9, **caractérisé en ce que** le dispositif de coulissement (20) est couplé à un quatrième entraînement.

11. Organe de commande selon la revendication 9 ou 10, **caractérisé en ce que** le dispositif de coulissement (20) présente une tête d'aspiration pour aspirer un article entreposé sur une surface de stockage et le tirer sur la table de dépôt (15).

12. Organe de commande selon l'une quelconque des revendications précédentes, **caractérisé en ce que** les mors de serrage allongés (1a, 1b, 3a, 3b) sont formés d'un matériau élastique.

13. Organe de commande selon l'une quelconque des revendications précédentes, **caractérisé en ce que** les surfaces de serrage des mors de serrage allongés (1a, 1b, 3a, 3b) sont recouvertes d'un matériau antidérapant.
